## Europäisches Patentamt

## European Patent Office

## Office européen des brevets

(19)

(11) Publication number: **0 104 501**
**B1**

(12) **EUROPEAN PATENT SPECIFICATION**

(45) Date of publication of patent specification: **28.12.88**

(51) Int. Cl.⁴: **G 01 N 27/56**

(21) Application number: **83108677.2**

(22) Date of filing: **02.09.83**

(54) Air-fuel ratio sensor arrangement.

(30) Priority: **03.09.82 JP 153709/82**

(43) Date of publication of application:
**04.04.84 Bulletin 84/14**

(45) Publication of the grant of the patent:
**28.12.88 Bulletin 88/52**

(84) Designated Contracting States:
**CH DE FR GB IT LI NL SE**

(56) References cited:
**EP-A-0 035 400**
**GB-A-2 057 140**
**US-A-3 514 377**
**US-A-3 650 934**
**US-A-3 691 023**
**US-A-3 698 384**
**US-A-3 699 032**

(73) Proprietor: **HITACHI, LTD.**
**6, Kanda Surugadai 4-chome Chiyoda-ku
Tokyo (JP)** .

(72) Inventor: **Suzuki, Seikou
3705, Kanai-cho
Hitachiohta-shi Ibaraki-ken (JP)**
Inventor: **Miki, Masayuki
1-5, Kosuna-cho
Katsuta-shi Ibaraki-ken (JP)**
Inventor: **Sasayama, Takao
2712-34, Kanesawa-cho
Hitachi-shi Ibaraki-ken (JP)**
Inventor: **Harada, Kohji
4-6-26, Higashitaga-cho
Hitachi-shi Ibaraki-ken (JP)**

(74) Representative: **Patentanwälte Beetz sen. -
Beetz jun. Timpe - Siegfried - Schmitt-Fumian
Steinsdorfstrasse 10
D-8000 München 22 (DE)**

## Description

### Background of the invention

The present invention relates to an air-fuel ratio sensor arrangement and, more particularly, to an air-fuel ratio sensor arrangement for an internal combustion engine of the kind referred to in the pre-characterizing part of patent claim 1. Such a sensor arrangement is known from EP—A—00 35 400.

Various types of air-fuel ratio sensors have been proposed which employ oxygen ion conductive solid electrolytes; however, the proposed sensors do not successfully operate at temperatures below about 600°C, in addition to such proposed sensors being strongly influenced by the temperature and failing to provide a quick response.

In, for example US—A—4,272,329, corresponding to EP—A—00 35 400, a sensor is disclosed which includes a pair of solid electrolytes formed with electrodes on respective sides of a cylindrical member, with a gas diffusion hole and two end faces to which the pair of electrolytes are each attached. A reference chamber is defined by a space surrounded by the solid electrolytes and the cylindrical member. With an oxygen sensor of this type, one solid electrolyte is employed as an oxygen pump cell and the other solid electrolyte is employed as an oxygen sensor cell, with the oxygen concentration in the reference chamber being controlled so as to reduce any temperature influences of a pump current, that is, the output signal.

In sensor arrangements, a voltage of an excitation power source for the oxygen pump cell is controlled and an electromotive force of the oxygen sensor cell maintains a constant value, with the pump current flowing through the solid electrolyte of the oxygen pump cell being measured by means of, for example, an amperemeter.

However, one disadvantage of the above noted arrangement resides in the fact that it is difficult to detect a concentration of oxygen remaining in the exhaust gases with any high degree of accuracy under conditions in which the temperature of the exhaust gases changes abruptly over a large range.

It is an object of the present invention to provide an air-fuel ratio arrangement for an internal combustion engine of a vehicle which is not adversely influenced by abrupt temperature changes of the exhaust gases, which functions reliably at a low temperature such as, for example, less than 500°C, which enables a rapid response time and which is simple in construction and therefore relatively inexpensive to manufacture.

These objects are achieved according to the invention with an air-fuel ratio sensor as claimed in claim 1.

In accordance with advantageous features of an embodiment of the present invention, at least one of the two solid electrolytes is made of a gas permeable porous material, and an electrode region between the two solid electrolytes is indirectly exposed to the surrounding exhaust gases. Alternatively, a separate gas permeable porous member may be sandwiched or interposed between the laminated side electrodes of the two solid electrolytes and the electrodes may be indirectly exposed to the surrounding exhaust gases.

Advantageously, in accordance with further features of an embodiment of the present invention, the voltage controller for controlling the excitation voltage applied between the two electrodes of the one solid electrolyte includes means for generating a first signal in accordance with the temperature of the solid electrolyte, with the predetermined value of the voltage controller or adjusting means changing in response to the first signal.

It is also possible in accordance with the present invention to provide a means for generating or producing a second signal in response to an electromotive force between electrodes of the other electrolyte, with means being provided for comparing the second signal of an electromotive force detecting means with the predetermined value signal of the electromotive force setting device, with an excitation voltage controller for changing an output voltage of the electric power source in response to the output signal of the comparing means.

Advantageously, the pair of solid electrolytes are made of a gas permeable and porous material and, preferably, the solid electrolytes include stabilized zirconia.

It is also possible in accordance with the present invention for either of the pair of electrolytes to be made of a gas impermeable material.

These and other objects and advantages of the present invention will become more apparent from the following description when taken in connection with the accompanying drawings which show, for the purposes of illustration only, several embodiments in accordance with the present invention.

### Brief description of the drawings

Figure 1 is a partially schematic block diagram of an air-fuel ratio sensor arrangement constructed in accordance with the present invention;

Figure 2 is a graphical illustration of the relationship between measured values of a most appropriate or optimum electromotive force corresponding to a temperature of a solid electrolyte;

Figure 3 is a graphical illustration of a relationship between temperature and resistivity of a solid electrolyte;

Figure 4 is a graphical illustration of a relationship between oxygen concentration and pump current when a voltage is maintained at a predetermined value;

Figure 5 is a graphical illustration of a relationship between oxygen concentration and a pump current when a voltage is changed in response to a temperature of the solid electrolyte;

Figure 6 is a cross-sectional view of an oxygen sensor constructed in accordance with the present invention;

Figure 7 is a cross-sectional view of another embodiment of an oxygen sensor constructed in accordance with the present invention; and

Figure 8 is a cross-sectional view taken along the line VIII—VIII in Figure 7.

Detailed description

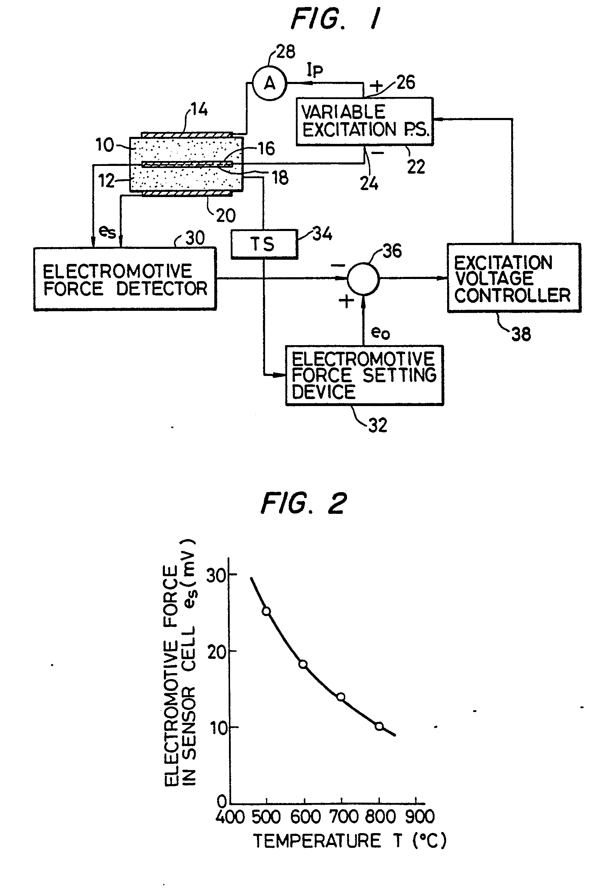

Referring now to the drawings wherein like reference numerals are used throughout the various views to designate like parts and, more particularly, to Figure 1, according to this figure, an oxygen sensor arrangement includes an oxygen sensor having a first and second solid electrolyte 10, 12, with each solid electrolyte 10, 12 being gas permeable, porous and being made for example, of zirconia stabilized with an element such as, for example, yttrium. The first and second solid electrolytes 10, 12 are formed, on both sides thereof, with porous electrodes 14, 16 and 18, 20 made of, for example, platinum, with the porous electrodes 16, 18 being laminated together in the manner illustrated in Figure 1. The first solid electrolyte 10 is employed as an oxygen pump cell and the second solid electrolyte 12 is used as an oxygen sensor cell.

The lamination and adhesive process of the solid electrolytes 10, 12 is carried out by forming the electrodes on both sides of zirconia sheets, thermally contact-bonding the zirconia sheets and subsequently, sintering the zirconia sheets at a high temperature. The porosity of the solid electrolytes 10, 12 may be changed as required by adjusting the particle size of the zirconia in the sheet state and the sintering temperature after the thermal contact-bonding process.

The electrodes 16, 18 are buried between or encompassed by the solid electrolytes 10, 12 and the electrodes 14, 20 are exposed to an exhaust gas environment. The electrodes 16, 18 are exposed to the exhaust gas indirectly through a plurality of very fine pores of the first and second solid electrolytes 10, 12.

An internal capacity of the electrodes 16, 18 is determined by the porosity thereof, and the electrodes 16, 18 have a very small value because the electrodes 16, 18 have a thickness of several μm to several tens of μm. As a result, even if the porosities of the first and second solid electrolytes 10, 12 are reduced to restrict the flow rate of oxygen diffusing into the region of the electrodes from the surrounding exhaust gases through the fine pores in the solid electrolytes 10, 12, the oxygen sensor maintains a rapid response of, for example, several tens of a millisecond.

Additionally, a pump current $I_p$ flowing through the first solid electrolyte 10 can be reduced by reducing a flow rate of oxygen diffusing into the region of the electrodes 16, 18 so that it is possible to improve the low temperature operability caused by the temperature dependency of the conductivity of oxygen ions of the solid electrolyte 10.

The sensor arrangement further includes a variable excitation power source 22 having a cathode 24, connected to the electrodes 16, 18, and an anode 26 connected to the electrode 14. Oxygen, in the region of the electrodes 16, 18, is. reduced into oxygen ions, and the ions migrate through the first solid electrolyte 10 to the electrode 14. The ions are then oxidized back into an oxygen gas and discharged into the exhaust gas. At the same time, the flow rate of the oxygen ions migrating through the first solid electrolyte 10, i.e., the pump current, $I_p$, is measured by an amperemeter 28. The pump current $I_p$ corresponds to the flow rate of the oxygen diffusing from the exhaust gas into the region of the electrodes 16, 18.

A reference oxygen concentration in a region of the electrodes 16, 18 is detected in terms of an electromotive force $e_s$ between the two electrodes 18, 20 on both sides of the second solid electrolyte 12. Thus, the first solid electrolyte 10 functions as the oxygen pump cell and the second solid electrolyte 12 functions as an oxygen sensor cell.

The electromotive force $e_s$ generated by the oxygen sensor cell is detected by means of an electromotive force detector 30, with an electromotive force setting device 32 being operable to set the most appropriate or optimum electromotive force $e_o$ according to the temperature of the second solid electrolyte 12. The electromotive force setting device 32 is adapted to generate a voltage having a value dependent upon temperature data T of the solid electrolyte 12 so as to improve the temperature influence and low temperature operation, which are caused by the conductivity of oxygen ions of the solid electrolyte 12. The temperature data T of the solid electrolyte 12 can be obtained easily by, for example, a temperature sensor 34 operatively connected to the solid electrolyte 12.

As shown in Figure 2, a relationship between the electromotive force $e_s$ of a solid electrolyte and temperature varies in accordance with the efficiency of the electrode material as a catalyst. Figure 2 provides an illustration of results obtained between measured values when, for example, a platinum sputtered electrode is used to promote the catalyzing effect.

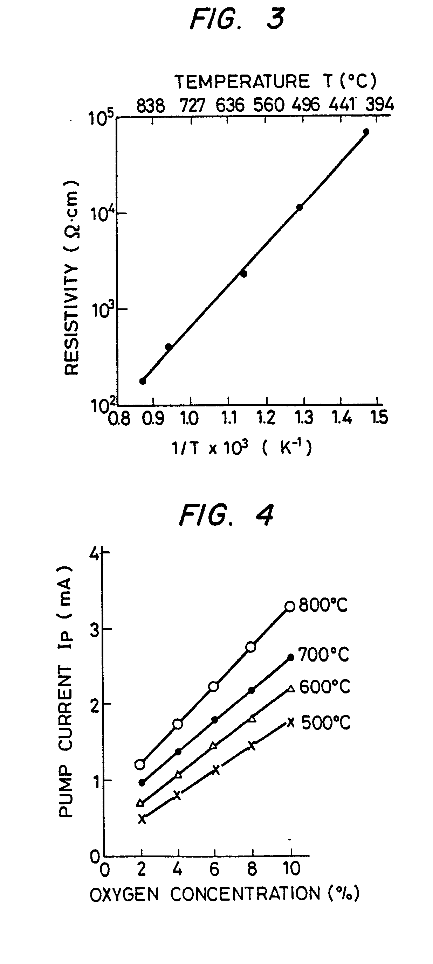

As shown in Figure 3, the temperature can readily be determined if the resistivity is known. Therefore, the resistivity of the solid electrolyte 12 is measured to detect the temperature of the solid electrolyte 12 by way of the graphical illustration of Figure 3 so that a voltage $e_o$ having the same value of that of the electromotive force $e_s$, corresponding to the temperature shown in Figure 2, may be generated by the electromotive force setting device 32.

The electromotive force $e_s$ detected by the electromotive force detector 30 and the electromotive force $e_o$ set by the electromotive force setting device 32 are compared by a comparator 36 so that an excitation voltage controller 38 is operated by an output corresponding to the difference, whereby a voltage E of the variable excitation power source 22 is controlled by the excitation voltage controller 38 so that the electromotive force $e_s$ has a predetermined value equal to that of the electromotive force $e_o$ set by the electromotive force setting device 32.

In the above described sensor arrangement, the oxygen concentration in the region of the electrode 16, 18 can be controlled to a lower level at a constant ratio than the level in the exhaust gas environment, thereby providing a pump current $I_p$ which is at a level sufficient to respond to the oxygen concentration in the exhaust gas even at low temperatures. Furthermore, the electromotive force $e_s$ of the oxygen sensor cell is set at a constant value that is dependent upon temperature, and it is possible to provide an air-fuel ratio sensor which is not very much influenced by temperature.

An internal capacity of the region corresponding to the referenced chamber is small so that it is possible to provide an air-fuel ratio sensor which has a rapid response.

As shown in Figure 4, illustrating a relationship between oxygen concentration and pump current for different temperature parameters, in a sensor arrangement wherein $e_s=10$ mV, the sensor retains a sufficient sensitivity to oxygen concentration even at a temperature of 500°C so that the low temperature operability of the sensor of the present invention is considerably improved. Moreover, as evident from Figure 4, when the electromotive force $e_s$ is constant at 10 mV independent of the temperature, the pump current $I_p$ is extremely dependent upon the temperature.

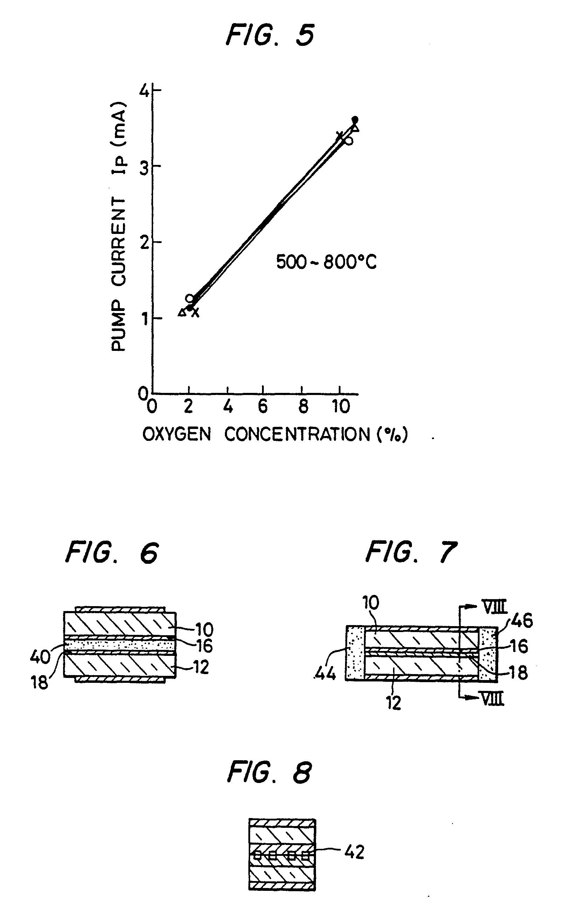

Figure 5 provides an example wherein the voltage E of the variable excitation power source 22 is varied so that the electromotive force $e_s$ is 10 mV at a temperature of 800°C, 14 mV at 700°C, 18 mV at 600°C, and 25 mV at 500°C. As shown in Figure 5, in these situations, the influence of the pump current $I_p$ upon temperature is remarkably reduced and, consequently, even if the temperature of the exhaust gas varies over a wide range, the concentration of oxygen remaining in the exhaust gases can be detected with a higher accuracy if the excitation voltage E is so varied that the voltage $e_s$ has predetermined different values in accordance with variations of the temperature of the exhaust gases.

While the oxygen sensor in the sensor arrangement of Figure 1 includes solid electrolytes 10, 12 fashioned of a gas permeable material, it is also possible for at least one of the solid electrolytes to be formed with a gas impermeable material. In this connection, as shown in Figure 6, solid electrolytes 10, 12 are provided which are fashioned as gas impermeable solid electrolytes, with a gas permeable porous ceramic material 40 being sandwiched or interposed between the electrodes 16, 18 and the respective solid electrolytes 10, 12. By virtue of this arrangement, the electrodes 16 and 18 are indirectly exposed to the surrounding exhaust gases through the ceramic member 40.

It is also possible as shown most clearly in Figures 7 and 8 to provide an oxygen sensor wherein holes 42 are formed in the electrodes 16, 18, and the electrodes 16, 18 are indirectly exposed to the surrounding exhaust gases through gas permeable solid electrolytes 44, 46.

While we have shown and described several embodiments in accordance with the present invention, it is understood that the same is not limited thereto but is susceptible of numerous changes and modifications as known to one having ordinary skill in the art and we therefore do not wish to be limited to the details shown and described herein, but intend to cover all such modifications as are encompassed by the scope of the appended claims.

**Claims**

1. An air-fuel ratio sensor arrangement comprising:
—a sensor having a first (10) and a second (12) oxygen ion conductive solid electrolyte arranged to be used as a pump cell and as a sensor cell, respectively, each electrolyte having electrodes (14, 16; 18, 20) formed on both sides thereof,
—a variable excitation power source (22) connected to the first solid electrolyte (10),
—a pump current-measuring device (28) for measuring the current $I_p$ flowing through the first solid electrolyte (10),
—a temperature sensor (34),
—an electromotive force detector sensing the electromotive force $e_s$ between the electrodes (18, 20) of the second electrolyte (12),
—and a temperature correction circuitry (32, 34, 36, 38), characterized in that
—said temperature sensor (34) is operatively connected to the second electrolyte (12), and
—said correction circuitry comprises:
—an electromotive force setting device (32) being connected to the temperature sensor (34) and being operable to set the optimum electromotive force $e_o$ according to the temperature of the second solid electrolyte (12),
—a comparator (36) for comparing the output signal of said electromotive force detector (30) with the predetermined value signal of said electromotive force setting device (32) and for putting out a difference signal,
—a voltage controller (38) for controlling the excitation voltage applied between the two electrodes (14, 16) of the first electrolyte (10) to maintain the voltage applied between the electrodes (18, 20) of the second electrolyte (12) on a predetermined value in response to the output signal of said comparator (36).

2. An air-fuel ratio sensor arrangement according to claim 1, wherein said solid electrolytes (10, 12) are formed of a gas permeable and porous material.

3. An air-fuel ratio sensor arrangement according to claim 2, wherein said material is stabilized zirconia.

4. An air-fuel ratio sensor arrangement according to claim 1, wherein said solid electrolytes (10, 12) are formed of gas impermeable material, and wherein a gas permeable porous material (40) is arranged between the two electrodes (16, 18) interposed between opposed inner surfaces of the solid electrolytes (10, 12).

5. An air-fuel ratio sensor arrangement according to claim 1, wherein said solid electrolytes (10, 12) are formed of a gas impermeable material, the two electrodes (16, 18) interposed between opposed inner surfaces of the solid electrolytes (10, 12) are laminated to each other, and wherein a further solid electrolyte (40) is disposed at each axial end of the first mentioned solid electrolytes (10, 12), said further solid electrolyte (40) being formed of a gas permeable porous material.

6. An air-fuel ratio sensor arrangement according to claim 5, wherein means are formed in each of the two electrodes (16, 18) interposed between opposed inner surfaces of the first mentioned solid electrolytes (10, 12) for enabling an indirect exposure of said last-mentioned electrodes (12) to exhaust gases.

7. An air-fuel ratio sensor arrangement according to claim 1, wherein at least one of the pair of electrolytes (10, 12) is made of a gas impermeable material.

8. An air-fuel ratio sensor arrangement according to claim 1, wherein said first and second solid electrolyte (10, 12) is formed of gas impermeable material and is laminated so as to provide a contact between the electrode (16, 18) at this interface, said solid electrolytes being surrounded by a porous material (44, 46) with means (42) being formed between the second electrode and third electrode for enabling a communication with the porous material.

9. An air-fuel ratio sensor arrangement according to claim 8, wherein said means (42) for enabling a communication is a hole formed between the electrode (16, 18) at said interface.

**Patentansprüche**

1. Luft-Kraftstoffverhältnis-Sensorvorrichtung, umfassend:

—einen Sensor mit einem ersten (10) und einem zweiten (12) sauerstoffionenleitenden Festelektrolyt, die als Pumpzelle bzw. als Sensorzelle dienen, wobei jeder Elektrolyt auf beiden Seiten mit Elektroden (14, 16; 18, 20) versehen ist,

—eine mit dem ersten Festelektrolyten (10) verbundene veränderliche Anregungsenergiequelle (22),

—ein Pumpstrom-Meßglied (28), das den durch den ersten Festelektrolyten (10) fließenden Strom $I_p$ mißt,

—einen Temperaturfühler (34),

—einen EMK-Detektor, der die EMK $e_S$ zwischen den Elektroden (18, 20) des zweiten Elektrolyten (12) erfaßt,

—und eine Temperaturkorrekturschaltung (32, 34, 36, 38), dadurch gekennzeichnet, daß

—der Temperaturfühler (34) mit dem zweiten Elektrolyten (12) in Wirkverbindung steht und

—die Korrekturschaltung umfaßt:

—ein EMK-Einstellglied (32), das mit dem Temperaturfühler (34) verbunden und aktivierbar ist zum Einstellen der optimalen EMK $e_o$ nach Maßgabe der Temperatur des zweiten Festelektrolyten (12),

—einen Vergleicher (36), der das Ausgangssignal des EMK-Detektors (30) mit dem einen vorgegebenen Wert aufweisenden Signal des EMK-Einstellglieds (32) vergleicht und ein Differenzsignal liefert,

—einen Spannungsregler (38), der die zwischen die beiden Elektroden (14, 16) des ersten Elektrolyten (10) gelegte Anregungsspannung nach Maßgabe des Ausgangssignals des Vergleichers (36) so regelt, daß die zwischen den Elektroden (18, 20) des zweiten Elektrolyten (12) liegende Spannung auf einem vorgegebenen Wert gehalten wird.

2. Luft-Kraftstoffverhältnis-Sensorvorrichtung nach Anspruch 1, wobei die Festelektrolyte (10, 12) aus einem gasdurchlässigen und porösen Werkstoff gebildet sind.

3. Luft-Kraftstoffverhältnis-Sensorvorrichtung nach Anspruch 2, wobei der Werkstoff stabilisiertes Zirkoniumdioxid ist.

4. Luft-Kraftstoffverhältnis-Sensorvorrichtung nach Anspruch 1, wobei die Festelektrolyte (10, 12) aus gasundurchlässigem Werkstoff gebildet sind und wobei zwischen den beiden Elektroden (16, 18), die zwischen einander gegenüberstehenden Innenflächen der Festelektrolyten (10, 12) liegen, ein gasdurchlässiger poröser Werkstoff (40) angeordnet ist.

5. Luft-Kraftstoffverhältnis-Sensorvorrichtung nach Anspruch 1, wobei die Festelektrolyte (10, 12) aus einem gasundruchlässigem Werkstoff gebildet sind, die beiden zwischen einander gegenüberstehenden Innenflächen der Festelektrolyte (10, 12) angeordneten Elektroden (16, 18) laminiert sind, und ein weiterer Festelektrolyt (40) an jedem axialen Ende der erstgenannten Festelektrolyte (10, 12) angeordnet und aus einem gasdurchlässigen porösen Werkstoff gebildet cst.

6. Luft-Kraftstoffverhältnis-Sensorvorrichtung nach Anspruch 5, wobei in jeder der zwei Elektroden (16, 18), die zwischen einander gegenüberstehenden Innenflächen der erstgenannten Festelektrolyte (10, 12) angeordnet sind, Mittel ausgebildet sind, die eine indirekte Beaufschlagung der letztgenannten Elektroden (12) mit Abgasen ermöglichen.

7. Luft-Kraftstoffverhältnis-Sensorvorrichtung nach Anspruch 1, wobei wenigstens einer der beiden Elektrolyte (10, 12) aus einem gasundurchlässigen Werkstoff gebildet ist.

8. Luft-Kraftstoffverhältnis-Sensorvorrichtung nach Anspruch 1, wobei der erste und der zweite Festelektrolyt (10, 12) aus einem gasundurchlässigen Werkstoff gebildet und so laminiert sind, daß ein Kontakt zwischen der an dieser Grenzfläche befindlichen Elektrode (16, 18) besteht, wobei die Festelektrolyte von einem porösen Werkstoff (44, 46) umgeben sind, und zwischen der zweiten und der dritten Elektrode Mittel (42) gebildet sind, die eine Verbindung mit dem porösen Werkstoff ermöglichen.

9. Luft-Kraftstoffverhältnis-Sensorvorrichtung nach Anspruch 8, wobei die Mittel (42) zur Herstellung einer Verbindung aus einem zwischen der Elektrode (16, 18) an der Grenzfläche gebildeten Loch bestehen.

**Revendications**

1. Agencement de capteur du rapport air/carburant comprenant:

—un capteur possédant des premier (10) et second (12) électrolytes solides conducteurs pour les ions oxygène et disposés de manière à être utilisés respectivement en tant que cellule formant pompe et cellule formant capteur, chaque électrolyte comportant des électrodes (14, 16; 18, 20) formées sur ses deux côtés,

—une source (22) d'alimentation en énergie d'excitation variable raccordée au premier électrolyte solide (10),

—un dispositif (28) de mesure du courant de pompe servant à mesurer le courant $I_p$ circulant dans le premier électrolyte solide (10),

—un capteur de température (34),

—un détecteur de la force électromotrice détectant la force électromotrice $e_s$ entre les électrodes (18, 20) du second électrolyte (12),

—et un circuit de correction de température (32, 34, 36, 38), caractérisé en ce que

—ledit capteur de température (34) est raccordé de façon opérationnelle au second électrolyte (12), et

—ledit circuit de correction comprend:

—un dispositif (32) de réglage de la force électromotrice, raccordé au capteur de température (34) et pouvant agir de manière à régler la force électromotrice optimale $e_o$ conformément à la température du second électrolyte solide (12),

—un comparateur (36) servant à comparer le signal de sortie dudit détecteur (30) de la force électromotrice au signal de valeur prédéterminée dudit dispositif (32) de réglage de la force électromotrice et à délivrer un signal de différence,

—un dispositif (38) de commande de la tension servant à commander la tension d'excitation appliquée entre les deux électrodes (14, 16) du premier électrolyte (10) de manière à maintenir la tension appliquée entre les électrodes (18, 20) du second électrolyte (12) à une valeur prédéterminée en réponse au signal de sortie dudit comparateur (36).

2. Agencement de capteur du rapport air/carbu- rant selon la revendication 1, dans lequel lesdits électrolytes solides (10, 12) sont formés par un matériau poreux et perméable aux gaz.

3. Agencement de capteur du rapport air/carburant selon la revendication 2, dans lequel ledit matériau est de la zircone stabilisée.

4. Agencement de capteur du rapport air/carburant selon la revendication 1, dans lequel lesdits électrolytes solides (10, 12) sont formés par un matériau imperméable aux gaz, et dans lequel un matériau poreux (40) perméable aux gaz est disposé entre les deux électrodes (16, 18) en étant intercalé entre les surfaces intérieures se faisant face des électrolytes solides (10, 12).

5. Agencement de capteur du rapport air/carburant selon la revendication 1, dans lequel lesdits électrolytes solides (10, 12) sont réalisés en un matériau imperméable aux gaz et les deux électrodes (16, 18) intercalées entre des surfaces intérieures se faisant face des électrolytes solides (10, 12) sont appliquées l'une sur l'autre, et dans lequel un électrolyte solide supplémentaire (40) est disposé au niveau de chaque extrémité axiale des premiers électrolytes solides mentionnés (10, 12), ledit électrolyte solide supplémentaire (40) étant formé d'un matériau poreux perméable aux gaz.

6. Agencement de capteur du rapport air/carburant selon la revendication 5, dans lequel des moyens sont formés dans chacune des deux électrodes (16, 18) intercalées entre des surfaces intérieures se faisant face des premiers électrolytes solides mentionnés (10, 12) de manière à permettre une exposition indirecte desdites électrodes (12) mentionnées en dernier lieu aux gas d'échappement.

7. Agencement de capteur du rapport air/carburant selon la revendication 1, dans lequel au moins un électrolyte du couple d'électrolytes (10, 12) est réalisé en un matériau imperméable aux gaz.

8. Agencement de capteur du rapport air/carburant selon la revendication 1, dans lequel lesdits premier et second électrolytes solides (10, 12) sont formés d'un matériau imperméable aux gaz et sont disposés en superposition de manière à établir un contact entre les électrodes (16, 18) au niveau de cette interface, lesdits électrolytes solides étant entourés par un matériau poreux (44, 46), tandis que des moyens (42) sont formés entre les seconde et troisième électrodes pour permettre une communication avec le matériau poreux.

9. Agencement de capteur du rapport air/carburant selon la revendication 8, dans lequel lesdits moyens (42) permettant une communication sont constitués par un trou formé entre les électrodes (16, 18) au niveau de ladite interface.

## FIG. 1

## FIG. 2

EP 0 104 501 B1

## FIG. 3

## FIG. 4

## FIG. 5

## FIG. 6

## FIG. 7

## FIG. 8